# EUROPEAN PATENT APPLICATION

(11) **EP 2 884 735 A1**
(43) Date of publication of application: **17.06.2015**
(21) Application number: 14189228.1
(22) Date of filing: 16.10.2014
(51) Int. Cl.: H04N 5/217

(54) **Method for operating a rear view camera system of a motor vehicle, rear view camera system and motor vehicle**

(30) Priority: 12.12.2013 DE 102013020950
(71) Applicant: Connaught Electronics Ltd., Tuam, County Galway (IE)
(72) Inventor: Deegan, Brian Michael Thomas, Galway City, County Galway (IE); Eoghan, Patrick, Roscam, County Galway (IE)
(74) Representative: Jauregui Urbahn, Kristian

(57) **Abstract**

The invention relates to a method for operating a rear view camera system (2) of a motor vehicle (1) including the steps of: providing a sequence of images by means of an image capturing device (3) of the rear view camera system (2) having an overall capturing area (9), wherein an environmental region (10) of the motor vehicle (1) behind a driver's seat of the motor vehicle (1) corresponding to the overall capturing area (9) of the image capturing device (3) is depicted; determining a partial area (19) of the overall capturing area (9) and a partial region of the images corresponding to the partial area (19) by means of an image processing device (11) of the rear view camera system (2) and displaying the partial region of the images on a display device (12), wherein a current body posture and/or a current line of vision of a driver of the motor vehicle (1) is detected by means of a detection device and the partial area (19) and/or a display region (21, 22) of a display region (20) of the display device (12), on which the partial region (23) of the images is displayed, is determined by the image processing device (11) depending on the current body posture and/or the current line of vision.

## Description

The invention relates to a method for operating a rear view camera system of a motor vehicle. A sequence of images (video) is provided by means of an image capturing device of the rear view camera system, which has an overall capturing area. In the images, an environmental region of the motor vehicle behind a driver's seat of the motor vehicle corresponding to the overall capturing area is depicted. A partial area of the overall capturing area and a partial region of the images corresponding to this partial area are determined by means of an image processing device. The partial region of the images is displayed on a display device. In addition, the invention relates to a rear view camera system for a motor vehicle as well as to a motor vehicle with a rear view camera system.

Camera systems for motor vehicles are already prior art. Presently, the interest is directed to a motor vehicle, in which a digital camera system is employed as an alternative to the exterior mirrors, which represents a digital mirror. Such vehicles, which do without conventional exterior mirrors, are already known from the prior art. Therein, a rear view camera system is employed instead of the exterior mirrors, which includes an image capturing device with one or more cameras. The image capturing device has a capturing area corresponding to an environmental region of the motor vehicle behind the driver's seat of the motor vehicle and behind the motor vehicle. The image capturing device provides a video, in which the overall capturing area of the image capturing device is depicted. However, on a display device (for example a display), not the entire capturing area is presented, but only a partial area of the overall capturing area. This means that only a partial region of the image frame is displayed on the display device, wherein the selected partial region has to comply with the legal requirements with respect to a minimum area of the vehicle environment, which has to be presented to the driver of the motor vehicle.

Such rear view camera systems are already prior art. Thus, for example, the document US 5 289 321 A describes a camera system, in which the captured images are presented on a display device, which is integrated in the rear view mirror in the interior of the vehicle. A display region is disposed on the left side of the rear view mirror, in which the vehicle environment to the left of and behind the vehicle is displayed. On the right side of the rear view mirror, in turn, a further display region is disposed, in which the environment to the right of the motor vehicle is displayed.

Furthermore, the document US 7 859 565 B2 describes a rear view camera system, in which additional information is also superimposed on the display device.

From the document US 8 130 269 B2 too, a camera system is known, in which additional information (a so-called overlay) is superimposed on the presentation on the display device, which is generated depending on the current roadway type and by which a certain distance from the motor vehicle is represented.

A particular challenge in rear view camera systems is in better informing the driver also about a possible risk of collision. Namely, in absence of the exterior mirrors, the driver is to be able to exclusively rely on the digital camera system.

It is further disadvantageous with known rear view camera systems that on the display always the same surrounding area of the vehicle is displayed. Compared with conventional rear view mirrors, the known rear view camera systems are thus relatively unintuitive. Namely, if with conventional rear view mirrors the driver wants to see a different surrounding area of the vehicle in the mirror, he can usually adjust his body posture so as to be able to see the desired surrounding area in the rear view mirror. If, however, a rear view camera system is used to replace a rear view mirror, this can lead to an irritation of the driver, since the displayed surrounding area always remains constant.

It is an object of the invention to demonstrate a solution how with a camera system of the initially mentioned kind the driver can be assisted in driving the motor vehicle particularly intuitively.

According to the invention, this object is solved by a method, by a rear view camera system as well as by a motor vehicle having the features according to the respective independent claims. Advantageous implementations of the invention are the subject matter of the dependent claims, of the description and of the figures.

A method according to the invention serves for operating a rear view camera system of a motor vehicle, wherein the motor vehicle preferably does not have conventional exterior mirrors, but the rear view camera system assumes the function of a digital exterior mirror. An image capturing device of the rear view camera system has an overall capturing area and provides a sequence of images to this overall capturing area. In these images, an environmental region of the motor vehicle behind a driver's seat of the motor vehicle is depicted, wherein this environmental region corresponds to the overall capturing area of the image capturing device. An image processing device determines a partial area of the overall capturing area and thus a partial region of the images corresponding to the partial area. On a display device, in particular a display, then, only the partial region of the images is displayed. According to the invention, it is provided that by means of a detection device a current body posture and/or a current line of vision of a driver of the motor vehicle is detected and the partial area and/or a display region of a display region of the display device, on which the partial region of the images is shown, is determined depending on the current body posture and/or the current line of vision.

Thus, by means of a detection device the current body posture - in particular the current head position - of the driver and/or driver's current line of vision is detected relative to the display device. Depending on this current body posture and/or line of vision the partial area and thus the partial region of the images is then selected, which is shown on the display device. Additionally or alternatively, depending on the body posture and/or the line of vision a display region of the entire display region is determined, on which the selected partial region of the images is shown. Such an approach has the advantage that the driver is assisted in driving the motor vehicle particularly intuitively, since the rear view camera system behaves as it were exactly like a conventional mirror, in which the displayed surrounding area changes in dependency on the driver's head position. Thus the method according to the invention combines the advantages of both a conventional mirror and an electronic rear view camera system. If, for example, the driver leans forward and thus in a direction away from the backrest of the driver's seat, the displayed surrounding area can be adjusted correspondingly. In this connection, a different image region can be shown, for example, and/or the partial region of the images can be displayed on a larger display region of the display device.

Said detection device, which detects the current body posture and/or the current line of vision, can, for example, comprise a camera arranged in the interior of the motor vehicle, which provides images, in which the driver's seat and the driver are depicted. The current body posture and/or the current line of vision can then be detected based on these images, namely by means of a calculating device.

In one embodiment it is provided that the size of the partial area and/or the size of the display region is determined depending on the current body posture and/or the current line of vision. Thus, on the one hand, the size of the partial region of the images can be varied depending on the body posture and/or the line of vision, i.e. the size of the section of the images presented to the driver. On the other hand, also the size of the display region of the display device can be varied depending on the body posture and/or the line of vision so that the selected partial region of the images can be displayed so as to be expanded or else compressed.

Preferably, it is determined on the basis of the body posture and/or the line of vision whether the driver is currently resting against a backrest of the driver's seat or leaning away from the backrest forward in driving direction. If it is detected that the driver is leaning away from the backrest forward in driving direction, the rear view camera system can be switched from a normal mode to a special mode. In this special mode, a partial area larger or shifted with respect to the normal mode and thus a larger or shifted partial region of the images can be selected. Additionally or alternatively, in the special mode a display region larger with respect to the normal mode can be selected, on which the partial region of the images is displayed. Thus, the rear view camera system behaves in correspondence with a conventional mirror. For, if the driver leans forward in driving direction, this usually means that he wants to see a different surrounding area in the mirror. This is now, correspondingly, implemented with the rear view camera system in a true-to-life manner.

In the normal mode, the display region of the display device can be divided in at least two display regions. In a first one of the display regions, the partial region of the images can be displayed, while for example user information is displayed in the second one of the display regions, in particular information with respect to an operation of the rear view camera system or so-called HMI (human machine interface) information. Therein, the first display region is preferably adapted to the partial region of the images selected in the normal mode such that this presentation is optimum and particularly aesthetical with respect to the image characteristics - i.e. with respect to the coloring, the white balance, the brightness and the like. Quality losses in the presentation of the partial region of the images can optionally only be accepted in the special mode.

In the special mode, the selected partial region of the images can be displayed on the entire display region of the display device. If the driver leans forward, the entire surface of the display device is used to display the selected partial region. This is particularly advantageous, since the driver usually only leans forward in situations of danger. In such hazardous situations thus the entire display region of the display device is used to present the selected partial region to the driver. Thus, the driver can perceive the respective surrounding area particularly well.

In one embodiment it can be provided that, if the driver is currently leaning against the backrest of the driver's seat and thus the normal mode is activated, a current degree of risk with respect to a collision of the motor vehicle with an object external to vehicle located in the overall capturing area is determined by means of a risk identification device based on sensor data of at least one environmental sensor of the motor vehicle, wherein the partial area and/or a display region of a display region of the display device, on which the partial region of the images is displayed, is determined depending on the current degree of risk.

Accordingly, a risk identification device determines the current degree of risk, which indicates the probability of a collision of the motor vehicle with an object located in the overall capturing area. This degree of risk is determined based on sensor data of at least one environmental sensor of the motor vehicle. Depending on the current degree of risk, then, the partial area and thus the partial region of the images is selected, which is displayed on the display device. Additionally or alternatively, a display region of the overall display region is determined depending on the current degree of risk, on which the selected partial region of the images is displayed. Such an approach has the advantage that the presentation on the display device can be situation-dependent and adequately dynamically adapted such that the driver is able to perceive the object external to vehicle and then take corresponding safety measures. Thus, the driver is reliably informed about the possible risk of collision by the rear view camera system, which in particular proves advantageous in absence of the conventional exterior mirrors.

The current degree of risk is determined based on sensor data. The sensor data is in turn provided by means of at least one environmental sensor. At least one of the following sensors can be used as the environmental sensor: the mentioned image capturing device providing images as sensor data, and/or at least one ultrasonic sensor and/or at least one radar sensor and/or at least one lidar sensor.

As the degree of risk, at least one of the mentioned parameters can be determined based on the sensor data: a relative speed between the motor vehicle and the object external to vehicle and/or a distance between the motor vehicle and the object and/or a time to collision.

The image capturing device includes one or more cameras. For example, at least two cameras can be employed, such as for example a first camera on the left lateral flank of the motor vehicle as well as a second camera on the right lateral flank of the motor vehicle. Optionally, a camera can also be employed on a rear of the motor vehicle, for example on the rear bumper or else on the tailgate. Preferably, the at least one camera is a color-sensitive camera, which is able to detect light in the visible spectral range and thus provide images. The at least one camera can be a CCD camera or a CMOS camera.

For example, the display device can be a display disposed in the interior of the motor vehicle such that it is in the visual range of the driver. Optionally, this display can also be integrated in a rear view mirror, which is disposed behind the windshield in the interior of the motor vehicle in a manner known per se.

Optionally, the display device can also be a dual display or a so-called "split view" display, on which contents dependent on the line of vision can be shown. Thus, for the driver, on the one hand, and the passenger, on the other hand, different contents can be displayed on the display device. In this connection, the driver can be shown the selected partial region of the images, whereas the passenger can be shown image contents of an infotainment system, for example.

As already explained, in an embodiment, it can be provided that the motor vehicle is formed free of conventional exterior mirrors such that the rear view camera system serves as a digital exterior mirror. Then, a partial area of the overall capturing area is displayed on the display device, which always at least complies with the legal requirement with respect to the size of the displayed environmental region.

Particularly preferably, the size of the partial area and thus the size of the displayed partial region of the images and/or the size of the display region, in which the partial region of the images is displayed, are determined depending on the current degree of risk. Thus, on the one hand, the size of the partial region of the images can be varied depending on the degree of risk, i.e. the size of the section of the images, which is presented to the driver. On the other hand, the size of the display region of the display device can also be varied depending on the degree of risk such that the selected partial region of the images is for example presented either in expanded or else compressed manner. This allows situation-dependent presentation of the vehicle environment.

In particular, it is provided that the current degree of risk is compared to at least one threshold value and the partial area of the overall capturing area and/or the display region of the display device are determined depending on the comparison. This embodiment can be implemented without much effort.

In this context, the rear view camera system can be operated in different operating modes: if the current degree of risk exceeds a first threshold value, the rear view camera system can be switched from a normal mode into a first risk mode. In this first risk mode, a partial area of the overall capturing area can be selected and displayed, which is in particular smaller with respect to the normal mode and in which the object external to vehicle is located. Thus, in the first risk mode, a smaller partial region of the images is selected than in the normal mode. Therein, this smaller partial region is preferably displayed on the same display region, on which the partial region of the images selected in the normal mode is also displayed. In order to ensure that the object external to vehicle is also depicted in the selected partial region of the images in the first risk mode, the relative position of the object with respect to the motor vehicle can be determined based on the sensor data. The partial region of the images then corresponds to a partial area of the overall capturing area, in which the object external to vehicle is located. In the first risk mode, thus, the object is overall larger presented and thereby can also be easier perceived by the driver.

The mentioned first threshold value is preferably already reached if the object is detected in the overall capturing area based on the sensor data. This means that the rear view camera system is already switched into the first risk mode if the object is detected for the first time. Thus, the attention of the driver is already early concentrated on the object.

In the normal mode, the display region of the display device can be divided in at least two display regions. In a first one of the display regions, the partial region of the images can be displayed, while for example user information is displayed in the second one of the display regions, in particular information with respect to an operation of the rear view camera system or so-called HMI (human machine interface) information. Therein, the first display region is preferably adapted to the partial region of the images selected in the normal mode such that this presentation is optimum and particularly aesthetical with respect to the image characteristics - i.e. with respect to the coloring, the white balance, the brightness and the like. Quality losses in the presentation of the partial region of the images can optionally only be accepted in the risk mode. Namely, in the risk mode, it is more important to concentrate the attention of the driver on the risk of collision than to display aesthetically optimum images.

In the first risk mode too, the display region of the display device can be divided in at least two display regions, in particular in the same display regions as in the normal mode. Here, in a first display region, the smaller partial region of the images associated with the first risk mode can be displayed, in which the object external to vehicle is magnified presented. In contrast, in a second display region, the partial region of the images can be displayed, which is otherwise displayed in the normal mode and thus is associated with the normal mode. This partial region of the images associated with the normal mode can be displayed in a smaller display region in the first risk mode such that this partial region is overall displayed in concentrated and thus compressed manner. Such an approach has the advantage that on the one hand, a partial region of the images is displayed, which concentrates the attention of the driver on the dangerous object, and on the other hand, a partial region is also displayed, which complies with the legal requirements to the size of the displayed vehicle environment.

If the current degree of risk exceeds a second threshold value higher with respect to first threshold value, the rear view camera system can be switched into a second risk mode. In this second risk mode, the attention of the driver is even greater concentrated on the risk.

Preferably, in the second risk mode, the second partial region of the images is displayed on the entire display region of the display device. This selected partial region is preferably the same partial region as it is also displayed in the normal mode. Since this partial region is now displayed on the entire display region of the display device, the driver can thus better estimate the risk and also decide whether or not corresponding steps are to be taken.

In order to satisfy the legal requirements with respect to the displayed environmental region, basically, a camera with a capturing angle of about 20° is sufficient. However, preferably, an image capturing device is employed, which overall has a considerably larger capturing angle and thus is able to cover a larger capturing area. In the normal mode, for example, only a partial area of the environment can be displayed to the driver, which complies with the legal requirements. However, it is also possible to present a larger partial area in the normal mode.

In particular in the normal mode, the partial area of the overall capturing area and thus the partial region of the images and/or the display region of the display region can be determined depending on at least one of the following parameters:
- depending on at least one drive parameter of the motor vehicle, in particular on the currently engaged gear and/or depending on the current speed and/or depending on the current direction of movement and/or depending on the current acceleration; for example, if the reverse gear is engaged, thus, a larger partial area of the environment can overall be presented since it can be assumed that a parking maneuver is to be performed; the relation can also apply that the higher the speed of the motor vehicle is, the smaller the partial area of the overall capturing area is; and/or
- depending on an input of the driver on an operating device - thus, the driver himself can adjust the size of the displayed partial region of the images.

In addition, the invention relates to a rear view camera system for a motor vehicle, wherein the rear view camera system is formed for performing a method according to the invention. The rear view camera system can have an image capturing device formed for providing a sequence of images and having an overall capturing area. In the images, an environmental region of the motor vehicle behind a driver's seat of the motor vehicle corresponding to the overall capturing area is depicted. The camera system can also include an image processing device formed for determining a partial area of the overall capturing area and a partial region of the images corresponding to the partial area. Optionally, the camera system can also include a display device for displaying the partial region. The camera system can include a risk identification device determining a current degree of risk with respect to a collision of the motor vehicle with an object external to vehicle based on sensor data of at least one environmental sensor. The image processing device is adapted to determine the partial area and/or a display region of a display region of the display device, on which the partial region is displayed, depending on the current degree of risk.

A motor vehicle according to the invention includes a rear view camera system according to the invention.

The preferred embodiments presented with respect to the method according to the invention as well as the advantages thereof correspondingly apply to the rear view camera system according to the invention as well as to the motor vehicle according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on a preferred embodiment as well as with reference to the attached drawings.

There show:
- Fig. 1: in schematic illustration a motor vehicle with a rear view camera system according to an embodiment of the invention;
- Fig. 2: a flow diagram of a method according to an embodiment of the invention;
- Fig. 3 to 5: a display device of the camera system, wherein the method is explained in more detail; and
- Fig. 6: a schematic view of the motor vehicle with a detection device.

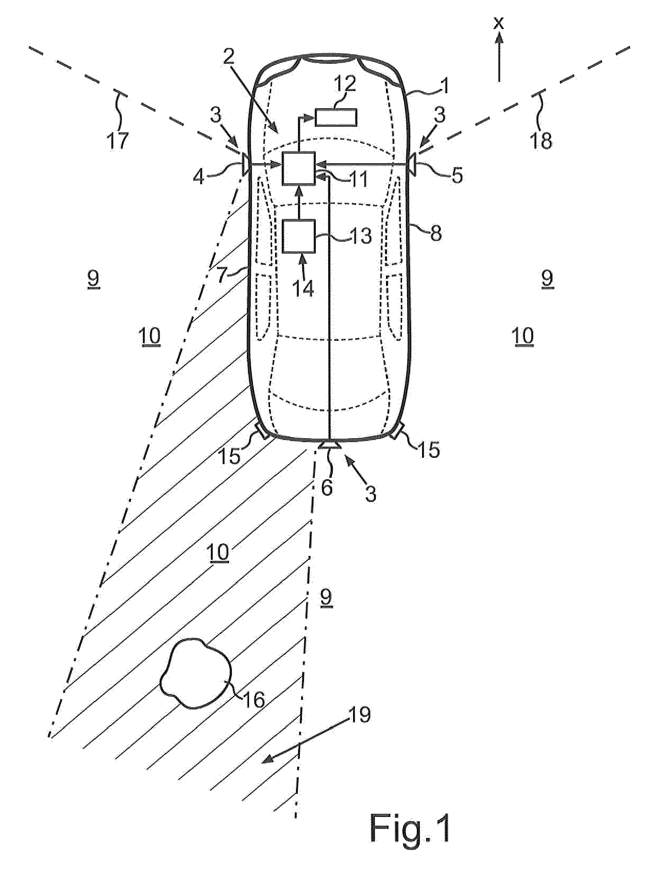

A motor vehicle 1 illustrated in Fig. 1 is a passenger car in the embodiment. The motor vehicle 1 includes a rear view camera system 2, which is installed in the motor vehicle 1 instead of the conventional exterior mirrors. The rear view camera system 2 includes an image capturing device 3, which includes at least a first camera 4 as well as a second camera 5 in the embodiment. The first camera 4 is disposed on a left lateral flank 7; the second camera 5 is disposed on a right lateral flank 8 of the motor vehicle 1. Optionally, the image capturing device 3 can also have a third camera 6, which is for example disposed on the rear bumper or else on a tailgate. The cameras 4, 5, 6 can for example be disposed in the same position, in which otherwise the conventional exterior mirrors are disposed. Thus, the cameras 4, 5 can be disposed in longitudinal direction x of the motor vehicle 1 in front of a driver's seat. The cameras 4, 5 can also be oriented somewhat rearwards in longitudinal direction x. The cameras 4, 5 can also have a relatively wide capturing angle, for example greater than 50°, in particular greater than 70°, in particular greater than 100°. The capturing angle of the camera 6 can be even greater, for instance in a range of values from 120° to 200°.

The cameras 4, 5, 6 are video cameras, for example CCD cameras or CMOS cameras.

The image capturing device 3 has an overall capturing area 9 representing a sum of the respective capturing areas of the cameras 4, 5, 6. The overall capturing area 9 corresponds to an environmental region 10 of the motor vehicle 1 behind the driver's seat. The image capturing device 3 provides a sequence of images, in which the overall capturing area 9 or the environmental region 10 is depicted. As indicated in Fig. 1, the overall capturing area 9 is bounded by bounding lines 17, 18. These bounding lines 18 can represent the boundary of the respective capturing areas of the cameras 4, 5.

The provided images are communicated to an electronic image processing device 11 coupled to the cameras 4, 5, 6. The image processing device 11 is coupled to a display device 12, which is for example formed as an LCD display. Furthermore, the image processing device 11 is coupled to a risk identification device 13, which receives sensor data 14 provided by at least one environmental sensor 15. As the environmental sensor 15, at least one radar sensor and/or at least one lidar sensor and/or at least one ultrasonic sensor can be employed. Additionally or alternatively, at least one of the cameras 4, 5, 6 can also be considered as environmental sensor.

The at least one environmental sensor 15 provides the sensor data 14 to the environmental region 10. This sensor data 14 can for example include distance values, which indicate a distance between the motor vehicle 1 and an object 16 external to vehicle, which is located in the environmental region 10.

In Fig. 1, the image processing device 11 as well as the risk identification device 13 are illustrated as two components separate from each other, for instance digital signal processors. However, it is also possible that the image processing device 11 and the risk identification device 13 are constituted by a common component, for example a common digital signal processor or a controller.

Based on the sensor data 14, the risk identification device 13 can determine a current degree of risk with respect to a collision of the motor vehicle 1 with the object 16 external to vehicle. The degree of risk can for example be a relative speed and/or a distance to the object 16 and/or a time to collision. The current values of the degree of risk are communicated to the image processing device 11.

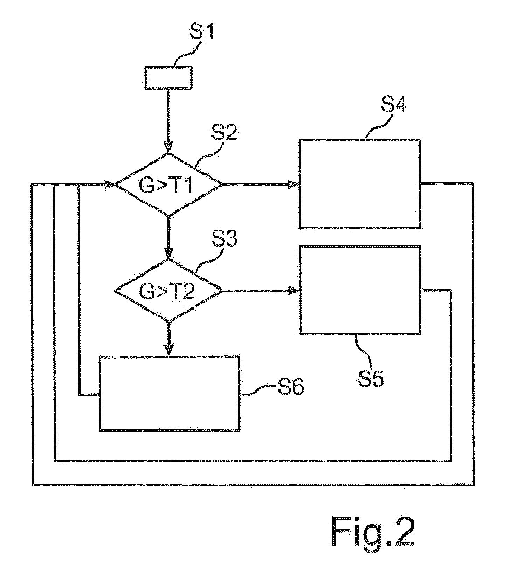

The rear view camera system 2 can be operated in different operating modes: a normal mode, a first risk mode as well as a second risk mode. A method for switching between the different operating modes is explained in more detail below with reference to Fig. 2: the method starts in a first step S1 and proceeds to a second step S2, in which the image processing device 11 examines if the current degree of risk G exceeds a first threshold value T1. Therein, the first threshold value T1 is defined such that this threshold value T1 already is considered to be exceeded if the object 16 is detected for the first time based on the sensor data 14. If the first threshold value T1 is exceeded, the method proceeds to a further step S3. If the degree of risk G is less than T1, thus, in a step S4, the normal mode is activated or maintained, and the method returns to step S2.

According to step S3, the image processing device 11 examines whether or not the degree of risk G exceeds a higher second threshold value T2. If this is not the case, thus, the method proceeds to a further step S5, in which a first risk mode is activated or maintained. Then, the method returns to step S2. If the degree of risk G is greater than T2, thus, the method proceeds to a further step S6, in which a second risk mode is activated. The method then returns to step S2.

With reference again to Fig. 1, the image processing device 11 can determine a partial area 19 (shaded area in Fig. 1) depending on the degree of risk G - in particular depending on the operating mode. A partial region of the images corresponds to this partial area 19 of the overall capturing area 9. This partial region is then displayed on the display device 12.

The presentations displayed on the display device 12 are depending on the current operating mode of the rear view camera system 2:

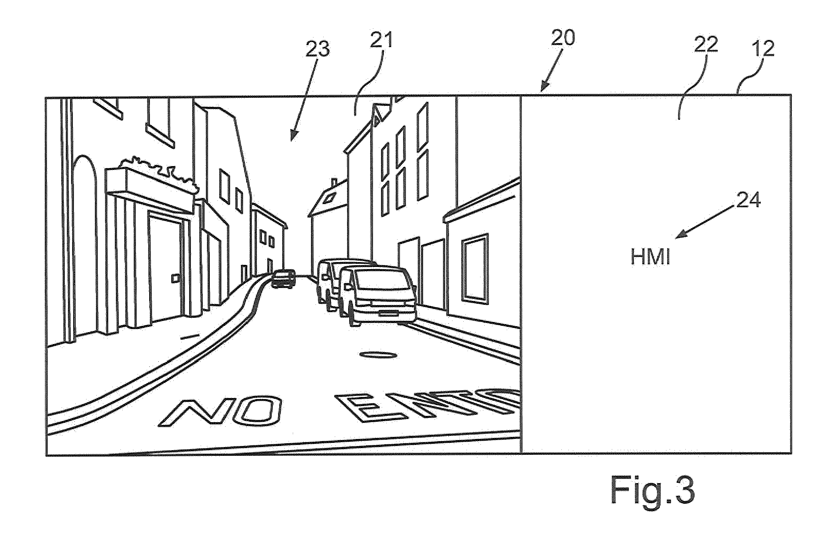

In Fig. 3, an illustration is shown as it is presented on the display device 12 in the normal mode. Here, an entire display region 20 of the display device 12 is divided in two display regions 21, 22. This division can either be fixed and invariable if a corresponding dual display with two separate fixed display regions 21, 22 is used. However, the separation can also be virtual by controlling the display device 12 by the image processing device 11 such that the sole display region 20 is virtually divided in two display regions 21, 22.

In the normal mode, a partial region 23 of the images is presented in the first display region 21, which corresponds to the partial area 19 of the overall capturing area 9. This presentation is optimized with respect to the image parameters such as brightness, white balance and other aesthetical parameters in the normal mode. In contrast, in the second display region 22, user information 24 with respect to the operation of the rear view camera system 2 is displayed, so-called HMI (human machine interface) information.

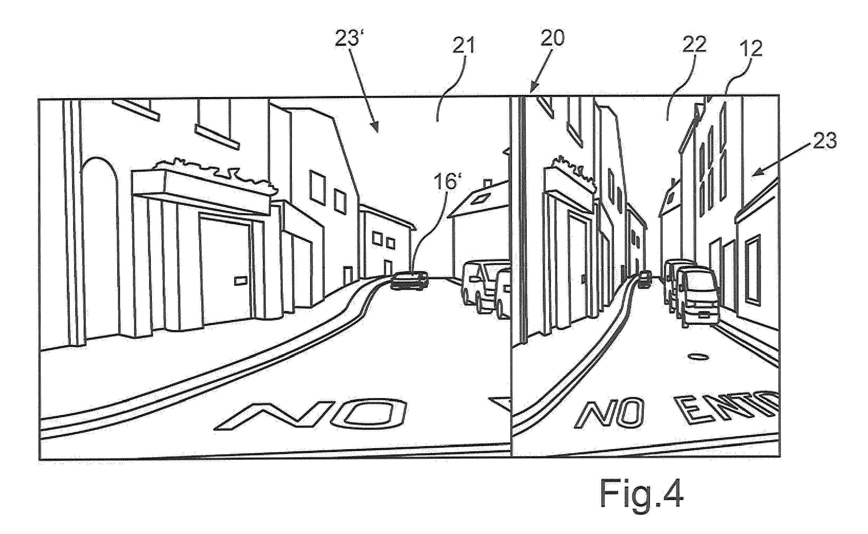

If the object 16 is now detected, thus, the rear view camera system 2 is switched into the first risk mode, in which a presentation according to Fig. 4 is generated on the display device 12. Here too, the display region 20 is divided in two display regions 21, 22, namely in the same display regions as in the normal mode. In the first risk mode, the image region 23 is presented in the second display region 22, which correspond to the image region, which is displayed in the normal mode according to Fig. 3 in the first display region 21. Since the second display region 22 is smaller than the first display region 21, this partial region 23 is compressed or concentrated and thus presented in slightly deformed manner. Therein, deformations of the depicted scene can be accepted. In contrast, in the first display region 21, a partial region 23' is displayed, which corresponds to a narrower (in horizontal direction) partial area 19 of the overall capturing area 9. Therein, the object 16' is depicted in enlarged manner in this partial area 19. Here too, optionally, deformations of the scene can be accepted.

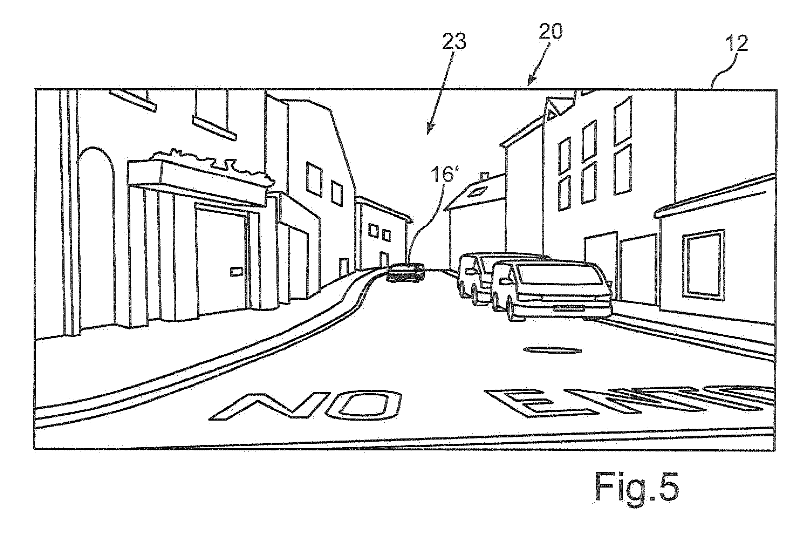

If the second threshold value T2 is then exceeded, thus, the rear view camera system 2 is switched into the second risk mode. As is apparent from Fig. 5, here, the entire display region 20 of the display device 12 is used for displaying the partial region 23 of the images, which is otherwise also displayed in the normal mode. However, this partial region 23 is presented on the entire display region 20. Here too, deformations of the scene can be accepted, wherein it is crucial that the driver is able to perceive the object 16' and also to estimate himself the risk of collision.

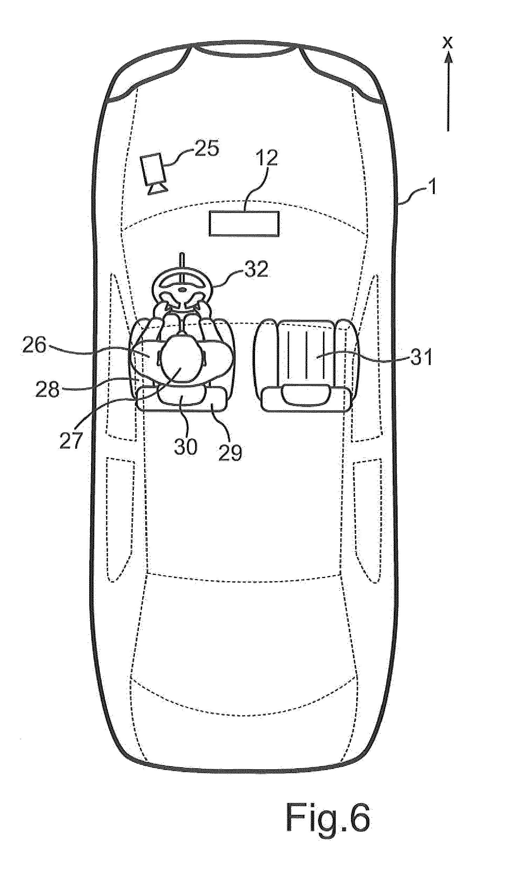

The switching between the normal mode and the risk modes according to the flow diagram of fig. 2 only holds for the situation in which the driver rests against a backrest of the driver's seat. Fig. 6 again shows the motor vehicle 1, which further features a detection device 25. For the sake of clarity, the further components of the vehicle 1 (cf. Fig. 1) are not represented. The detection device 25 is configured to detect a body posture and/or line of vision of a driver 26. In particular, the detection device 25 detects the current position of a head 27 of the driver 26. Moreover, Fig. 6 also shows the driver's seat 28 with a backrest 29 and a head rest 30, as well as a passenger seat 31. The detection device 25 can, for example, be provided in the form of a camera, which provides images in which the driver 26 is shown along with the driver's seat 28. These images are, for example, transmitted to the image processing device 11 (cf. Fig. 1). On the basis of the images it can be detected whether the driver 26 is currently leaning against the backrest 29 or leaning away from the backrest 29 forward in the vehicle longitudinal direction x. This can, for example, be detected based on the current position of the head 27 or the shoulders of the driver 26. The driver 26 leaning against the backrest 29 constitutes a normal driving position, in which case the flow diagram according to Fig. 2 is applied.

However, if it is detected that the driver 26 is leaning forward in the longitudinal direction of the vehicle x and thus away from the backrest 29, i.e. in the direction of a steering wheel 32, the system 2 is switched from the normal mode into a special mode. For this purpose, for instance a threshold value for the distance between the driver 26 and the backrest 29 is predetermined so that when this threshold value is exceeded the special mode is activated. As shown in Fig. 5, in the special mode the entire display region 20 of the display device 12 is used to display the selected partial region 23 of the images. This partial region 23 is displayed on the entire display region 20. It can be the partial region 23 otherwise also shown in the normal mode so that here, too, deformations of the scene have to be accepted. However, it is also possible to select a different partial region 23 from the one in the normal mode, for example a larger partial region 23 and/or a partial region 23 shifted with respect to the normal mode.

## Claims

1. Method for operating a rear view camera system (2) of a motor vehicle (1), including the steps of:
- providing a sequence of images by means of an image capturing device (3) of the rear view camera system (2), the image capturing device (3) having an overall capturing area (9), wherein an environmental region (10) of the motor vehicle (1) behind a driver's seat (28) of the motor vehicle (1) corresponding to the overall capturing area (9) of the image capturing device (3) is depicted in the images,
- determining a partial area (19) of the overall capturing area (9) and a partial region (23) of the images corresponding to the partial area (19) by means of an image processing device (11) of the rear view camera system (2), and
- displaying the partial region (23) of the images on a display device (12), **characterized in that**
a current body posture and/or a current line of vision of a driver (26) of the motor vehicle (1) is detected by means of a detection device (25) and the partial area (19) and/or a display region (21, 22) of a display region (20) of the display device (12), on which the partial region (23) of the images is displayed, is determined by the image processing device (11) depending on the current body posture and/or the current line of vision.

2. Method according to claim 1,
**characterized in that**
the motor vehicle (1) is formed free of exterior mirrors and the rear view camera system (2) is formed as a digital exterior mirror.

3. Method according to claim 1 or 2,
**characterized in that**
the size of the partial area (19) and/or of the display region (21, 22) is determined depending on the current body posture and/or the current line of vision.

4. Method according to any one of the preceding claims,
**characterized in that**
it is determined based on the body posture and/or the line of vision, whether the driver (26) is currently leaning against a backrest (29) of the driver's seat (28) or leaning away from the backrest (29) forward in longitudinal direction (x), and if the driver (26) is leaning away from the backrest (29) forward in longitudinal direction (x), the rear view camera system (2) is switched from a normal mode to a special mode, in which:
- a partial area (19) larger or shifted with respect to the normal mode is selected and/or
- a display region (21, 22) larger with respect to the normal mode is selected, on which the partial region (23) is displayed.

5. Method according to claim 4,
**characterized in that**
in the normal mode, the display region (20) of the display device (12) is divided in at least two display regions (21, 22), wherein the partial region (23) of the images is displayed in a first display region (21) of the display region (20), and user information (24) different from the images, in particular with respect to operation of the rear view camera system (2), is displayed in a second display region (22) of the display region (20).

6. Method according to claim 4 or 5,
**characterized in that**
in the special mode, the selected partial region (23) of the images is displayed on the entire display region (20) of the display device (12).

7. Method according to any one of claims 4 to 6,
**characterized in that**
a current degree of risk (G) with respect to a collision of the motor vehicle (1) with an object (16) external to vehicle located in the overall capturing area (9) is determined by means of a risk identification device (13) based on sensor data (14) of at least one environmental sensor (15) of the motor vehicle (1), wherein, if the driver is currently leaning against the backrest of the driver's seat, the partial area (19) and/or the display region (21, 22), on which the partial region (23) of the images is displayed, is determined by the image processing device (11) depending on the current degree of risk (G).

8. Method according to claim 7,
**characterized in that**
if the driver is currently leaning against the backrest of the driver's seat, the size of the partial area (19) and/or of the display region (21, 22) is determined depending on the current degree of risk (G).

9. Method according to claim 7 or 8,
**characterized in that**
the current degree of risk (G) is compared to at least one threshold value (T1, T2) and the partial area (19) and/or the display region (21, 22) are determined depending on the comparison.

10. Method according to claim 9,
**characterized in that**
if the current degree of risk (G) exceeds a first threshold value (T1), the rear view camera system (2) is switched from the normal mode into a first risk mode, in which a partial area (19) smaller with respect to the normal mode is selected, in which the object (16) external to vehicle is located.

11. Method according to claim 10,
**characterized in that**
the first threshold value (T1) is already reached if the object (16) is detected in the overall capturing area (9) based on the sensor data (14).

12. Method according to claim 10 or 11,
**characterized in that**
in the first risk mode, the display region (20) of the display device (12) is divided in at least two display regions (21, 22), in particular the same display regions (21, 22) as in the normal mode, wherein the smaller partial region (23') of the images associated with the first risk mode is displayed in a first display region (21) of the display region (20) and the partial region (23) of the images associated with the normal mode is displayed in a second display region (22) of the display region (20).

13. Method according to any one of claims 10 to 12,
**characterized in that**
if the current degree of risk (G) exceeds a second threshold value (T2) higher with respect to the first threshold value (T1), the rear view camera system (2) is switched from the first risk mode into a second risk mode.

14. Method according to claim 13,
**characterized in that**
in the second risk mode, the selected partial region (23) of the images, in particular the partial region (23) associated with the normal mode, is displayed on the entire display region (20) of the display device (12).

15. Rear view camera system (2) for a motor vehicle (1), wherein the rear view camera system (2) is adapted to perform a method according to any one of the preceding claims.

16. Motor vehicle (1) with a rear view camera system (2) according to claim 15, wherein the motor vehicle (1) is preferably formed free of exterior mirrors.

## Amended claims

### Amended claims in accordance with Rule 137(2) EPC.

1. Method for operating a rear view camera system (2) of a motor vehicle (1), including the steps of:
- providing a sequence of images by means of an image capturing device (3) of the rear view camera system (2), the image capturing device (3) having an overall capturing area (9), wherein an environmental region (10) of the motor vehicle (1) behind a driver's seat (28) of the motor vehicle (1) corresponding to the overall capturing area (9) of the image capturing device (3) is depicted in the images,
- determining a partial area (19) of the overall capturing area (9) and a partial region (23) of the images corresponding to the partial area (19) by means of an image processing device (11) of the rear view camera system (2), and
- displaying the partial region (23) of the images on a display device (12), **characterized in that**
a current body posture and/or a current line of vision of a driver (26) of the motor vehicle (1) is detected by means of a detection device (25) and the partial area (19) and/or a display region (21, 22) of a display region (20) of the display device (12), on which the partial region (23) of the images is displayed, is determined by the image processing device (11) depending on the current body posture and/or the current line of vision
wherein it is determined based on the body posture and/or the line of vision, whether the driver (26) is currently leaning against a backrest (29) of the driver's seat (28) or leaning away from the backrest (29) forward in longitudinal direction (x), and if the driver (26) is leaning away from the backrest (29) forward in longitudinal direction (x), the rear view camera system (2) is switched from a normal mode to a special mode, in which:
- a partial area (19) larger or shifted with respect to the normal mode is selected and/or
a display region (21, 22) larger with respect to the normal mode is selected, on which the partial region (23) is displayed.

2. Method according to claim 1,
**characterized in that**
the motor vehicle (1) is formed free of exterior mirrors and the rear view camera system (2) is formed as a digital exterior mirror.

3. Method according to claim 1 or 2,
**characterized in that**
the size of the partial area (19) and/or of the display region (21, 22) is determined depending on the current body posture and/or the current line of vision.

4. Method according to any one of the preceding claims,
**characterized in that**
in the normal mode, the display region (20) of the display device (12) is divided in at least two display regions (21, 22), wherein the partial region (23) of the images is displayed in a first display region (21) of the display region (20), and user information (24) different from the images, in particular with respect to operation of the rear view camera system (2), is displayed in a second display region (22) of the display region (20).

5. Method according to any one of the preceding claims,
**characterized in that**
in the special mode, the selected partial region (23) of the images is displayed on the entire display region (20) of the display device (12).

6. Method according to any one of the preceding claims,
**characterized in that**
a current degree of risk (G) with respect to a collision of the motor vehicle (1) with an object (16) external to vehicle located in the overall capturing area (9) is determined by means of a risk identification device (13) based on sensor data (14) of at least one environmental sensor (15) of the motor vehicle (1), wherein, if the driver is currently leaning against the backrest of the driver's seat, the partial area (19) and/or the display region (21, 22), on which the partial region (23) of the images is displayed, is determined by the image processing device (11) depending on the current degree of risk (G).

7. Method according to claim 6,
**characterized in that**
if the driver is currently leaning against the backrest of the driver's seat, the size of the partial area (19) and/or of the display region (21, 22) is determined depending on the current degree of risk (G).

8. Method according to claim 6 or 7,
**characterized in that**
the current degree of risk (G) is compared to at least one threshold value (T1, T2) and the partial area (19) and/or the display region (21, 22) are determined depending on the comparison.

9. Method according to claim 8,
**characterized in that**
if the current degree of risk (G) exceeds a first threshold value (T1), the rear view camera system (2) is switched from the normal mode into a first risk mode, in which a partial area (19) smaller with respect to the normal mode is selected, in which the object (16) external to vehicle is located.

10. Method according to claim 9,
**characterized in that**
the first threshold value (T1) is already reached if the object (16) is detected in the overall capturing area (9) based on the sensor data (14).

11. Method according to claim 9 or 10,
**characterized in that**
in the first risk mode, the display region (20) of the display device (12) is divided in at least two display regions (21, 22), in particular the same display regions (21, 22) as in the normal mode, wherein the smaller partial region (23') of the images associated with the first risk mode is displayed in a first display region (21) of the display region (20) and the partial region (23) of the images associated with the normal mode is displayed in a second display region (22) of the display region (20).

12. Method according to any one of claims 9 to 11,
**characterized in that**
if the current degree of risk (G) exceeds a second threshold value (T2) higher with respect to the first threshold value (T1), the rear view camera system (2) is switched from the first risk mode into a second risk mode.

13. Method according to claim 12,
**characterized in that**
in the second risk mode, the selected partial region (23) of the images, in particular the partial region (23) associated with the normal mode, is displayed on the entire display region (20) of the display device (12).

14. Rear view camera system (2) for a motor vehicle (1), wherein the rear view camera system (2) is adapted to perform a method according to any one of the preceding claims.

15. Motor vehicle (1) with a rear view camera system (2) according to claim 14, wherein the motor vehicle (1) is preferably formed free of exterior mirrors.
